# EUROPÄISCHE PATENTANMELDUNG

(11) **EP 0 967 427 A2**
(43) Veröffentlichungstag der Anmeldung: **29.12.1999**
(21) Anmeldenummer: 99111921.5
(22) Anmeldetag: 22.06.1999
(51) Int. Cl.: F16L 33/20, F16L 33/22

(54) **Rohrverbindung, insbesondere für Kunststoffrohre**

(30) Priorität: 24.06.1998 DE 19828141
(71) Anmelder: FRÄNKISCHE ROHRWERKE, GEBR. KIRCHNER GmbH & Co., D-97486 Königsberg (DE)
(72) Erfinder: Johannes, Ralf, 97421 Schweinfurt (DE); Burkard, Johannes, 97486 Königsberg (DE)
(74) Vertreter: Schwabe - Sandmair - Marx

(57) **Zusammenfassung**

Die Erfindung betrifft eine Rohrverbindung für eine Preßverbindung mit einer Stützhülse (12a, 12b), die eine umfängliche Profilierung (16) mit Stegen (20) und Nuten (18) aufweist, und mit einer Preßhülse, wobei erfindungsgemäß die Profilierung eine umfängliche Vertiefung (16) mit Nuten (18) und Stegen (20) umfaßt, wobei eine axial-parallel zur Stützhülse erstreckte Oberflächenhüllkurve (40a, 40b), die über die radial außenliegenden Enden der Stege (20) gelegt ist, unterhalb der an die Profilierung (16) angrenzende Oberfläche (14) der Stützhülse (12a, 12b) verläuft.

## Beschreibung

Die Erfindung betrifft eine Rohrverbindung, insbesondere für Kunststoffrohre bzw. Verbundrohre, für eine Preßverbindung, mit einer Stützhülse, die eine umfängliche Profilierung mit Stegen und Nuten aufweist, und mit einer Preßhülse, gemäß dem Oberbegriff des Patentanspruchs 1.

Im Stand der Technik sind diverse Arten von Rohrverbindungen bekannt, die insbesondere für Kunststoff-Metall-Kunststoff-Verbundrohre eingesetzt werden. Derartige Rohre werden häufig im Sanitärbereich und zuweilen auch im Heizungsbau eingesetzt. Hierbei ist es notwendig, zum Teil auch Verbindungen zwischen Rohren und daran anschließenden Rohren, Wasserverteilern und dergleichen vorzusehen. Die Preßverbindungstechnik spielt hierbei in der jüngeren Zeit eine immer größere Rolle, da diese Verbindungstechnik äußerst haltbar, kostengünstig und verläßlich ist.

Es gibt jedoch verschiedene Probleme, die bislang noch nicht zufriedenstellend gelöst worden sind. Ist ein Rohr auf eine Rohrverbindung bzw. deren Stützhülse aufgeschoben worden und darauf mittels einer Preßhülse verpreßt und damit festgelegt worden, so können im späteren Betrieb ganz erhebliche Drücke entstehen, die natürlich dazu beitragen können, daß das aufgesetzte und festgelegte Rohr von der Stützhülse abgehoben wird, so daß Undichtigkeiten auftreten können oder die Rohrverbindung sogar vollständig unterbrochen wird.

Betrachtet man beispielsweise die Situation in Hochhäusern mit vielen Stockwerken, so können die Rohrleitungen und damit auch die Rohrverbindungen mit Drücken oberhalb von 20 Bar oder mehr belastet werden. Gerade bei Hochhäusern kommt hinzu, daß temperaturbedingt das Bauwerk arbeitet und zusätzliche Zugbelastungen auftreten, die auf das Rohr und die Rohrverbindung einwirken. Ganz besonders bei größeren Rohrdurchmessern verschiebt sich das Verhältnis von der Dichtfläche zum Umfang und damit zur Druckbelastung immer mehr zu einem ungünstigeren Ende, so daß gerade dann, wenn besonders große Durchmesser zum Einsatz gelangen, etwa in Hochhäusern, und die Belastungen sowieso übermäßig ansteigen, die Verbindung und deren Dichtwirkung beeinträchtigt werden.

Es ist deshalb eine Aufgabe der vorliegenden Erfindung, eine Rohrverbindung, insbesondere für Kunststoffrohre bzw. Verbundrohre, für eine Preßverbindung vorzuschlagen, die belastbarer ist als herkömmliche, gleichartige Verbindungen. Ferner ist es eine Aufgabe gemäß der vorliegenden Erfindung, eine Rohrverbindung vorzuschlagen, die trotzdem kostengünstig bleibt, obwohl sie wesentlich belastbarer ist. Ferner soll eine Rohrverbindung vorgeschlagen werden, die auch unter Belastung besonders dicht und verläßlich ist.

Die genannten Aufgaben werden durch eine Rohrverbindung mit den im Patentanspruch 1 aufgeführten Merkmalen gelöst. Zweckmäßige Ausführungsformen der erfindungsgemäßen Rohrverbindung werden durch die Unteransprüche definiert.

Die gemäß der vorliegenden Erfindung zu erzielenden Vorteile beruhen darauf, daß die wenigstens eine Profilierung der Stützhülse eine umfängliche Vertiefung umfaßt, die mehrere Nutenstege aufweist, wobei eine axial-parallel zur Stützhülse erstreckte Oberflächenhüllkurve, die über die radial außenliegenden Enden der Stege gelegt ist, unterhalb der an die Profilierung angrenzenden Oberfläche der Stützhülse verläuft.

Dabei weist die Oberflächenhüllkurve eine Krümmung auf, die konvex ist bzw. in die umfängliche Oberfläche der Stützhülse hinein verläuft.

Wird bei einer derartigen Konfiguration die über der Stützhülse befindliche Preßhülse verpreßt, so daß deren Material über der Profilierung der Stützhülse radial nach innen ausgelenkt wird, so wird das Material des Kunststoffrohres bzw. des Verbundrohres in die Profilierung hinein versenkt, wobei einerseits die einzelnen Nuten und Stege und andererseits die durch die Hüllkurve bedingte Vertiefung zu einer überlagerten Halterungskonfiguration führen, die aufgrund ihrer kontinuierlichen Ausbildung eine gegenüber dem Stand der Technik beachtlich gesteigerte Haltefunktion bewirkt und darüber hinaus selbstdichtend ist. Die kontinuierliche Krümmung der Profilierung in bezug auf die Oberflächenhüllkurve führt dazu, daß Hohlräume nach dem Verpressen zwischen dem festgelegten Rohr und der Stützhülse bzw. deren Profilierung vermieden werden. Das Kunststoffmaterial des Rohres kann nicht später in vorhandene Hohlräume relaxieren, was bei der herkömmlichen, eckigen Ausbildung von Profilierungen bei Stützhülsen von Rohrverbindungen nach dem Stand der Technik regelmäßig der Fall ist. Diese Relaxation des Materials des Rohres in Hohlräumen führt dazu, daß die innere Spannung einer Rohrverbindung nachläßt, so daß die mechanische Haltekraft wie auch eine mögliche Dichtwirkung darunter leiden.

Messungen haben ergeben, daß insbesondere bei großen Rohrdurchmessern eine Steigerung der Haltekraft gegenüber dem Stand der Technik in etwa verdoppelt wird. Mit anderen Worten, die Längskraftschlüssigkeit kann durch eine Rohrverbindung gemäß der vorliegenden Erfindung ganz erheblich gesteigert werden.

Dabei ist es von Vorteil, wenn innerhalb der Profilierung möglichst viele Stege und Nuten vorgesehen sind, wobei deren Abmessungen dadurch beschränkt sind, daß deren Stabilität insbesondere während des Verpreßvorganges nicht überbelastet werden darf, so daß womöglich die Stege verbogen werden oder kippen, zerdrückt werden oder dergleichen. Bei einer Ausbildung der Rohrverbindung bzw. der Stützhülse aus Messing kann ein Steg am oberen Ende beispielsweise eine Dicke von etwa 0,7 bis 1,0 mm aufweisen und sollte je nach Höhe des Steges bzw. Tiefe der angrenzenden Nut bei einer Höhe von ca. 1,5 bis 2,5 mm beispielsweise an seiner Basis eine Breite von etwa 1,4 bis ca. 2,5 mm nicht unterschreiten. Dieses ist selbstverständlich lediglich ein Beispiel, das auch von dem Material abhängig ist, aus dem die Stützhülse gefertigt ist. Neben Messing, Rotguß, Edelstahl und selbst Kunststoff kommen natürlich auch noch andere Materialien zur Fertigung entsprechender Stützhülsen von Rohrverbindungen in Betracht. Die gleichen Materialien kommen auch als Fertigungsmaterialien für die Preßhülse der erfindungsgemäßen Rohrverbindung in Betracht.

Besonders vorteilhaft ist es, wenn die durch die Nuten gebildete untere Hüllkurve, die sich axial-parallel zur Stützhülse erstreckt, unterhalb der Oberflächenhüllkurve verläuft. Dabei sollte die untere Hüllkurve vorteilhafterweise ebenfalls eine Krümmung haben, die konvex ist bzw. in die umfängliche Oberfläche der Stützhülse hinein verläuft. Diese Ausgestaltung führt ebenfalls zu einem verbesserten Materialfluß des Kunststoffmaterials der festzulegenden Kunststoffrohre in die Profilierung.

Weiterhin ist es äußerst vorteilhaft, wenn die Nuten im Längsschnitt der Stützhülse ein gerundetes Profil haben bzw. rund sind. Diese ganz besondere Art der Profilierung führt dazu, daß auch hier die Bildung von Hohlräumen verläßlich vermieden werden kann, so daß später keine Relaxation des Kunststoffmaterials in entsprechende Hohlräume auftreten kann.

Um eine verbesserte Haltewirkung zu erzielen, können die Stege wenigstens auf einer Seite, bevorzugt entgegengesetzt zu der Aufschubrichtung des festzulegenden Rohres mit einer Kante mit einem eingeschlossenen Winkel von ca. 90° haben. Es ist auch möglich, die Stege mit Spitzen an ihren radial nach außen gerichteten Enden zu versehen. Es hat sich als vorteilhaft herausgestellt, wenn die Stege Kanten haben, die in etwa einen Winkel von 90° haben, also beispielsweise einen Winkel in einem Bereich von ca. 70° bis ca. 120° aufweisen. Dabei ist immer jeweils der Winkel maßgeblich, der zwischen der Oberfläche des Steges und dem radial nach innen verlaufenden Stegfortsatz vorhanden ist.

Um die hervorragende Dichtwirkung der erfindungsgemäßen Rohrverbindung weiter zu verbessern, sollte an die Profilierung in Axialrichtung der Stützhülse eine Nut für einen O-Ring anschließen. Diese Nut kann natürlich auch sogleich mit einem O-Ring ausgestattet sein. Hier ist darauf zu achten, daß das Verpreßwerkzeug nach Möglichkeit seine Wirkung auf die Preßhülse nur in den Bereichen ausübt, in denen unter der Preßhülse und unter dem festzulegenden Rohr die Profilierung mit Merkmalen gemäß der Erfindung liegt. Die O-Ring-Bereiche bzw. -Nuten sind von einem erhöhen Preßdruck freizuhalten, damit die O-Ringe während des Verpreßvorganges nicht beschädigt werden können. Eine Beschädigung der O-Ringe würde die durch diese O-Ringe sehr vorteilhaft zu erzielende Dichtwirkung beeinträchtigen.

Natürlich ist es vorteilhaft, wenn mehrere der erfindungsgemäß ausgebildeten Profilierungen entlang einer Stützhülse vorgesehen sind. Natürlich können die erfindungsgemäßen Profilierungen auch mit anderen Profilierungen gepaart verwendet werden.

Insofern mehrere Profilierungen eingesetzt werden, kann es auch zweckmäßig sein, zwischen den Profilierungen bzw. vor und/oder hinter den Profilierungen jeweils Nuten vorzusehen, die für O-Ring-Dichtungen vorgesehen sind.

Besonders vorteilhaft ist es, wenn die Randabschnitte der umfänglichen Vertiefungen der Profilierungen abgerundet sind. Auf diese Weise kann weder beim Aufschieben noch beim Abziehen eines Rohres zu Montage- bzw. Justagezwecken von der Kunststoffinnenhaut bzw. dem Kunststoffrohr am Innenumfang Kunststoff abgeschält werden. Abgetrennte Kunststoffschalen können ansonsten einerseits die mechanische Stabilität schädigen und andererseits, wenn ein derartiger Kunststoffspan über eine O-Ring-Dichtung und/oder über eine Profilierung mit Merkmalen gemäß der Erfindung hinweg zu liegen kommt, auch zu Leckagen führen. Entsprechend ist es gemäß der Erfindung auch vorteilhaft, daß die radial außenliegenden Enden der Stege ebenfalls keine Beschädigungen am Rohr bzw. der inneren Kunststoffschicht des Verbundrohres hervorrufen können. Ein Rohr kann dementsprechend auf die Stützhülse aufgeschoben und von dieser wieder abgezogen werden, ohne daß das Rohr hierunter zu leiden hätte.

Um den Weg, über den das Rohr auf die Stützhülse der Rohrverbindung mit Merkmalen nach der Erfindung geschoben wird, zu begrenzen, kann die Rohrverbindung in Aufschubrichtung des Rohres am Ende der Stützhülse mit einem Anschlag versehen sein. Dieser Anschlag kann auch dazu dienen, die Rohrverbindung von Hand oder mit einem Werkzeug während der Bearbeitung zu halten.

Vorteilhafterweise kann der Anschlag auch eine Positionierhilfe aufweisen, um ein Preßwerkzeug in einer definierten Stellung zum Verpressen der Preßhülse an der erfindungsgemaßen Rohrverbindung ansetzen zu können. Dabei kann ein entsprechendes Preßwerkzeug in Form einer Preßzange oder einem Schlingenzuggerät über eine gabelförmige Erstreckung an dem Werkzeug exakt zu der Positionierhilfe, beispielsweise in der Form einer Nut, ausgerichtet werden.

Vorteilhafterweise ist jenseits der Stützhülse der Rohrverbindung mit Merkmalen nach der Erfindung ein weiterer Ansetzabschnitt vorgesehen, etwa ein Gewindeabschnitt, eine weitere Stützhülse oder dergleichen. Auf diese Weise kann die erfindungsgemäße Rohrverbindung beispielsweise an einen Verteilerblock angesetzt werden oder auch zur Verlängerung eines Rohres an ein anderes Rohr angesetzt werden. Natürlich können hier Knie, Verzweigungen oder dergleichen entsprechend vorgesehen werden. Diese weiteren Ansetzabschnitte können, so sie ebenfalls zum Anschließen von Rohren vorgesehen sind, ebenfalls mit Profilen gemäß der Erfindung versehen sein.

Vorteilhafterweise ist die Stützhülse in Aufschubrichtung des Rohres am vorderen Ende am Außenumfang abgrundet, um auch hier aufzuschiebende Rohre nicht zu beschädigen. Zudem wird durch die Abrundung am Außenumfang das Aufschieben erleichtert, da an dem Außenumfang die Stützhülse im Bereich der Abrundung einen geringeren Durchmesser aufweist als der Innendurchmesser des aufzuschiebenden Rohres.

Ferner ist es von Vorteil, wenn am Anschlag und/oder an dem dem Anschlag zugeordneten Ende der Stützhülse ein Lagesichtkontrollabschnitt anordenbar bzw. vorgesehen ist. Dieser Abschnitt kann beispielsweise in der Form eines Ausschnittes in dem Anschlag vorgesehen sein. Es ist auch möglich, einen getrennten, separaten Ring auf der Stützhülse vorzusehen, der unterbrochen ist, so daß einerseits als Abstandshalter der Ring zu wirken vermag und dieser Ring andererseits einen Ausschnitt hat, so daß visuell die Anlage des Rohres an den Ring geprüft werden kann.

Ferner kann am anschlagseitigen Ende der Stützhülse eine galvanische Trennung anordenbar sein. Hier kann beispielsweise eine Nut vorgesehen sein, in die ein als galvanische Trennung dienender Kunststoffring eingeschnappt werden kann. Der Lagesichtkontrollabschnitt und die galvanische Trennung können im Prinzip einstückig ausgebildet sein.

Zusammenfassend sei darauf hingewiesen, daß es zu den wesentlichen Merkmalen bzw. Vorteilen der Rohrverbindung gemäß der vorliegenden Erfindung gehört, daß die Stützhülse mit der erfindungsgemäßen Profilierung einerseits während der Montage oder Justage eines Rohres auf der Stützhülse keine Beschädigungen am Innenumfang des Rohres bewirkt, und andererseits nach dem Verpressen ein besonders inniger Eingriff des Materials des Rohres in die Profilierung der Stützhülse der Rohrverbindung bewerkstelligt werden kann. Hohlräume werden gemäß der Erfindung weitgehend bzw. vollständig vermieden.

Nachfolgend wird die vorliegende Erfindung anhand einer bevorzugten Ausführungsform unter Bezugnahme auf die beigefügten Figuren näher erläutert. Dabei werden weitere Merkmale, Vorzüge und Zielsetzungen gemäß der Erfindung offenbart, wobei in den Darstellungen
- Fig. 1: eine bevorzugte Ausführungsform in einer teils längsschnittlichen Darstellung und einer teils seitenansichtlichen Darstellung wiedergibt;
- Fig. 2: detaillierter einen Schnitt durch eine Stützhülse der Rohrverbindung gemäß Fig. 1 zeigt; und
- Fig. 3: einen Ausschnitt gemäß Fig. 2 vergrößert wiedergibt.

In den Figuren sind gleiche oder zumindest funktionsgleiche Abschnitte bzw. Einzelheiten durch gleiche Bezugszeichen gekennzeichnet.

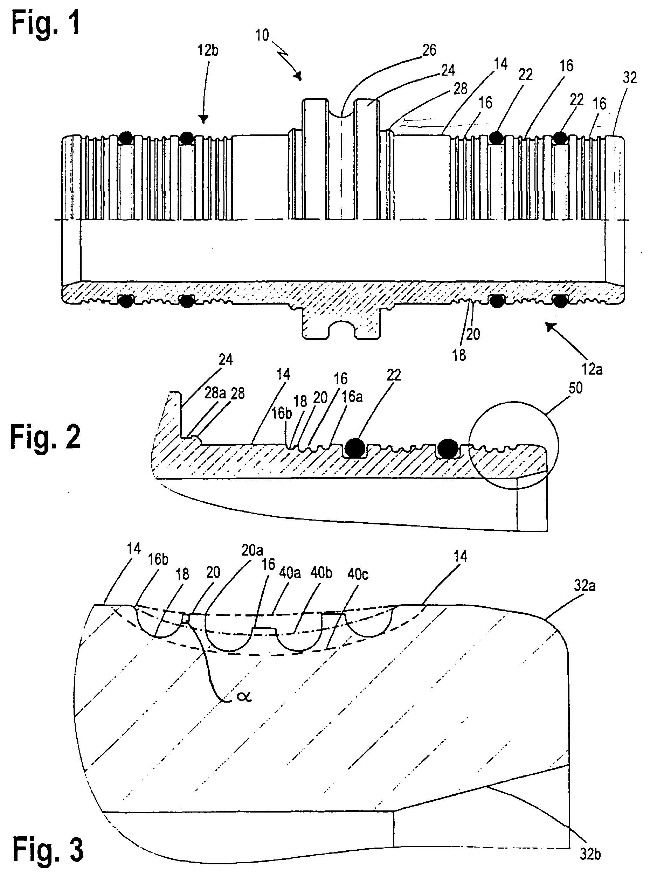

In Fig. 1 ist eine Rohrverbindung mit Merkmalen gemäß der Erfindung allgemein durch das Bezugszeichen 10 gekennzeichnet. Die Rohrverbindung 10 weist zwei prinzipiell gleich ausgebildete Stützhülsen 12a, 12b auf, zwischen denen ein Anschlag 24 angeordnet ist.

Der Anschlag 24 weist eine Nut 26 auf, die als Positionierhilfe dient, um eine Preßzange oder dergleichen als Preßwerkzeug ansetzen zu können. Dabei weißt die Preßzange einen gabelförmigen Fortsatz auf, der in die Nut eingreift, wobei der gabelartige Fortsatz am Werkzeug in Verbindung mit der Nut 26 als Führung dient, so daß die Preßzange millimetergenau für einen Verpreßvorgang in Stellung gebracht werden kann. Am Anschlag 24 ist des weiteren ein Festlegungsabschnitt 28 vorgesehen, auf den beispielsweise eine Kunststoffscheibe zur galvanischen Trennung des Rohres, beispielsweise eines Kunststoff-Metall-Kunststoff-Verbundrohres (nicht dargestellt) gegenüber dem Anschlag 24 festgelegt werden kann.

Die Stützhülse 14 weist in der hier dargestellten Ausführungsform drei Profilierungen 16 auf, die zur mechanischen Festlegung eines Rohres bzw. eines Verbundrohres dienen. Ferner sind zwischen den Profilierungen 16 jeweilige O-Ring-Nuten mit O-Ringen 22 vorgesehen, die im wesentlichen zu Dichtzwecken angeordnet werden.

Die Profilierungen 16 weisen jeweils Stege 20 und Nuten 18 auf, wobei zu erkennen ist, daß die Stegspitzen bzw. Stegenden in etwa auf einem in die Stützhülsenfläche hinein verlaufenden Teilkreis enden. Dieser Teilkreis, der auch als gekrümmte Linie bezeichnet werden kann, die insbesondere eine konvexe Form aufweist, wird später noch im einzelnen unter Bezugnahme auf Fig. 3 beschrieben.

Die unteren Enden bzw. Böden der Nuten 18 liegen ebenfalls auf einer entsprechend gekrümmten Kurve bzw. einem Teilkreis (siehe Fig. 3).

Der Anfang der Stützhülse, der mit dem Bezugszeichen 32 bezeichnet ist, ist abgerundet, so daß der Umfang der Stützhülse im Bereich des Anfangs 32 verringert ist. Das Aufschieben eines Rohres wird hierdurch erleichtert. Ferner wird hierdurch eine Beschädigung des Innenumfanges des Rohres beim Aufschieben bzw. beim Abziehen eines Rohres von der Stützhülse 14 jedenfalls vermieden.

Gemäß Fig. 2 ist zusätzlich zu erkennen, daß der Festlegungsbereich 28 zum Festlegen einer galvanischen Trennung und/oder einer Lagesichtkontrolle eine Nut 28a aufweist. Der dieser Nut 28a zugeordnete Steg des Festlegungsabschnitts ermöglicht das Aufschnappen beispielsweise eines Kunststoffringes, der dann innerhalb der Nut 28a festgelegt ist.

Die gemäß Fig. 2 mit Bezugszeichen versehen Profilierung 16 ist in Axialrichtung an ihrem Anfang 16a und ihrem Ende 16b an den hier zugeordneten Kanten abgerundet, um auch hier einer Beschädigung des Innenumfangs des Rohres beim Aufschieben bzw. Abziehen entgegenzuwirken.

Gemäß Fig. 3 ist eine besonders vorteilhafte Art der Profilierung der Stützhülse 12a gezeigt, die innerhalb der Oberfläche 14 der Stützhülse vorgesehen ist.

Wesentlich ist hier, daß die oberen Enden der Stege 20 gegenüber der Oberfläche 14 der Stützhülse radial nach innen zurückversetzt sind. So könnten die oberen Enden der Stege 20 beispielsweise entlang der Oberflächenhüllkurve 40a oder einer anderen Oberflächenhüllkurve 40b verlaufen.

Hier verlaufen die oberen Enden der Stege 20 zwischen zwei Oberflächenhüllkurven, nämlich den Oberflächenhüllkurven 40a und 40b. Diese Maßnahme ist hier zu dem Zweck durchgeführt, damit am Rande der Profilierung 16 gemäß Fig. 3 zunächst ein möglichst kontinuierlicher Übergang bei der Verformung und dem Eintreffen des Rohres in die Profilierung 16 bewerkstelligt werden kann. Um für einen zusätzlichen guten mechanischen Halt noch mehr Kunststoffmaterial in die Profilierung 16 einbringen zu können, ist der mittlere Steg 20 weiter nach unten versetzt bzw. kürzer ausgebildet. Vorteilhafterweise sollte der Verpressungsbereich an einer Preßhülse gerade in diesem Bereich der Stützhülse vorgesehen werden.

Auch die unteren Enden bzw. der jeweilige Grund der Nuten 18 verläuft auf einer entsprechenden Hüllkurve 40c, wobei die Nuten eine gerundete Form aufweisen. Auch hier ist eine besonders kontinuierliche Einbringung des Kunststoffmaterials des festzulegenden Rohres möglich, wobei keine Hohlräume zu befürchten sind.

Am Anfang der Stützhülse ist innenumfänglich noch eine konische Erweiterung 32b vorgesehen, die dazu dient, Strömungsgeräusche nach Möglichkeit zu verhindern, wenn beispielsweise Wasser durch die Leitung und dementsprechend auch durch die Rohrverbindung strömt.

Bei der Betrachtung der vorliegenden Erfindung ist ferner in Betracht zu ziehen, daß es prinzipiell natürlich zu bevorzugen wäre, wenn die gesamte Stützhülse 12a bzw. deren Oberfläche 14 mit Nuten 18 und Stegen 20 überzogen wäre. Um jedoch eine Preßhülse über ihren gesamten Umfang und nicht nur über bestimmte geringe umfängliche Bereiche zu verpressen, wären derart große Kräfte erforderlich, daß herkömmliche Werkzeuge, d.h. Preßzangen, hierfür nicht geeignet wären. Während eine normale, herkömmliche Preßzange einen Preßdruck von ca. 10 Tonnen aufzubringen hat, müßte eine Preßzange mit einer entsprechenden vollflächigen Verpressungsfunktion die 10- bis 25-fache Kraft für den Verpressungsvorgang aufbringen. Da derartige Werkzeuge zum einen kaum handhabbar wären und zum anderen mit sehr hohen Kosten verbunden wären, werden Preßhülsen nur über sehr kleine axiale Bereiche umfänglich einer Preßverformung unterzogen.

Die in den Figuren dargestellten Hüllkurven 40a, 40b, 40c sind natürlich rein beispielhaft. Es ist zu bedenken, daß die oberen Enden der Stege bzw. die unteren Enden der Nuten lediglich in etwa auf einer Hüllkurve oder im Bereich zweier Hüllkurven zu liegen kommen müssen. Wesentlich ist die Kontinuität der Ausformung der Bestandteile der Profilierung 16, die ein Einfließen des verformten Kunststoffmaterials eines Rohres und das hohlraumfreie Ausfüllen der Profilierung begünstigen sollen.

## Patentansprüche

1. Rohrverbindung, insbesondere für Kunststoffrohre bzw. Verbundrohre, für eine Preßverbindung, mit einer Stützhülse (12a, 12b), die eine umfängliche Profilierung (16) mit Stegen (20) und Nuten (18) aufweist, und einer Preßhülse, gekennzeichnet durch die folgenden Merkmale:
a) die Profilierung umfaßt wenigstens eine umfängliche Vertiefung (16),
b) die umfängliche Vertiefung (16) weist mehrere Nuten (18) und Stege (20) auf, und
c) eine axial-parallel zur Stützhülse (12a, 12b) erstreckte Oberflächenhüllkurve (40a, 40b), die über die radial außenliegenden Enden der Stege (20) gelegt ist, verläuft unterhalb der an die Profilierung (16) angrenzenden Oberfläche (14) der Stützhülse (12a, 12b).

2. Rohrverbindung nach Anspruch 1, dadurch gekennzeichnet, daß die Oberflächenhüllkurve (40a, 40b) eine Krümmung hat, die konvex ist bzw. in die umfängliche Oberfläche (14) in Axialrichtung der Stützhülse hinein verläuft.

3. Rohrverbindung nach einem der Ansprüche 1 und 2, dadurch gekennzeichnet, daß die durch die Nuten (18) gebildete untere Hüllkurve (40c), die sich axial-parallel zur Stützhülse erstreckt, unterhalb der Oberflächenhüllkurve (40a, 40b) verläuft.

4. Rohrverbindung nach Anspruch 3, dadurch gekennzeichnet, daß die untere Hüllkurve (40c) eine Krümmung hat, die konvex ist bzw. in die umfängliche Oberfläche (14) in Axialrichtung der Stützhülse hinein verläuft.

5. Rohrverbindung nach einem der Ansprüche 1 bis 4, dadurch gekennzeichnet, daß die Nuten (18) im Längsschnitt der Stützhülse gerundet bzw. rund oder teilkreisförmig sind.

6. Rohrverbindung nach einem der Ansprüche 1 bis 5, dadurch gekennzeichnet, daß die Stege wenigstens auf einer Seite eine Kante mit einem eingeschlossenen Winkel (α) von etwa 80° bis 120°, bevorzugt nahe 90° haben.

7. Rohrverbindung nach einem der Ansprüche 1 bis 6, dadurch gekennzeichnet, daß an die Profilierung (16) in Axialrichtung eine Nut für bzw. mit einem O-Ring (22) anschließt.

8. Rohrverbindung nach einem der Ansprüche 1 bis 7, dadurch gekennzeichnet, daß in Aufschubrichtung des Rohres am Ende der Stützhülse ein Anschlag (24) vorgesehen ist, wobei der Anschlag (24) bevorzugt einen Positionierhilfebereich (26) zum Ansetzen eines Preßwerkzeuges zum Verpressen der Preßhülse über der Stützhülse (12a) aufweist.

9. Rohrverbindung nach einem der Ansprüche 1 bis 14, dadurch gekennzeichnet, daß am Anschlag (24) und/oder an dem dem Anschlag zugeordneten Ende der Stützhülse (12a) ein Lagesichtkontrollabschnitt anordenbar bzw. vorgesehen ist.

10. Rohrverbindung nach einem der Ansprüche 1 bis 15, dadurch gekennzeichnet, daß am anschlagseitigen Ende der Stützhülse (12a) eine galvanische Trennung anordenbar (28) bzw. angeordnet ist, wobei bevorzugt der Lagesichtkontrollabschnitt die galvanische Trennung umfaßt.
